# EUROPEAN PATENT SPECIFICATION

(11) **EP 2 348 820 B1**
(45) Date of publication and mention of the grant of the patent: **08.11.2017**
(21) Application number: 09788349.0
(22) Date of filing: 30.09.2009
(51) Int. Cl.: A01J 25/11

(54) **CHEESE MAKING APPARATUS WITH VERTICAL DRAINING COLUMN AND DOSING DEVICE**
KÄSEHERSTELLUNGSVORRICHTUNG MIT VERTIKALER ABFÜHRSÄULE UND DOSIERVORRICHTUNG
APPAREIL DE PRODUCTION FROMAGÈRE AVEC COLONNE D'ÉGOUTTAGE VERTICALE ET DISPOSITIF DE DOSAGE

(30) Priority: 30.09.2008 NL 2002041
(43) Date of publication of application: 03.08.2011
(73) Proprietor: Tetra Laval Holdings & Finance S.A., 1009 Pully (CH)
(72) Inventor: MOL, Wicher, Harm, NL-8331 GT Steenwijk (NL)
(74) Representative: Tetra Pak - Patent Attorneys SE
(86) International application number: PCT/NL2009/050586
(87) International publication number: WO 2010/039031

(56) References cited:
- EP-A- 0 931 453
- US-A- 4 539 902
- US-A- 5 082 681

## Description

The invention relates to an apparatus for making cheese, comprising at least one vertical tubular draining column for receiving and draining cheese curd, which column at the lower end is provided with a dosing device for cutting off and discharging curd blocks, which dosing device comprises a dosing plate vertically reciprocable in a sliding sleeve, for positioning a cut-off curd block in the sliding sleeve, which sliding sleeve is horizontally reciprocable between a first position just under the draining column and a second position above a set-up point for a cheese mold, wherein supporting means are provided for supporting a curd block during a movement of the sliding sleeve from the first to the second position, as well as operating means for removing the supporting means when the sliding sleeve is in the second position, and wherein the reciprocable dosing plate is further designed as supporting means for a curd block during the movement of the sliding sleeve from the first to the second position.

In the cheese production process, in a known manner, curd is prepared from milk in a curd maker. Usually, the curd in the curd maker is stirred and cut and the whey thereby released is partly discharged and for the rest is supplied together with the curd mass via a buffer tank to an apparatus for producing blocks of cheese. Although cheese can be prepared from curd in many ways, in large-scale cheese production often use is made of draining columns. Such a column comprises a hollow vertical tube, to which, in operation, a mixture of curd and whey is supplied at the top. Examples of such draining columns are the various types of machines being offered by applicant under the names of Tetra Tebel Casomatic® and Tetra Damrow DMS®. In the column, the curd is increasingly compacted from the top down, so that at the bottom of the column blocks of cheese can be cut off. To this end, at the bottom of the column, a dosing device is placed, which comprises a horizontally acting guillotine blade. The guillotine blade closes off the column, but is periodically opened, so that the curd column in the tube can move down over a settable distance. When thereupon the guillotine blade is brought into the closing position again, a curd block is thereby cut off. The thus obtained curd blocks are thereupon transferred to a cheese mold, also called cheese vat, for further professing.

More particularly, prior to opening of the guillotine blade, a dosing plate reciprocable in a sliding sleeve, also called cassette, is brought closely under or against the guillotine blade. When the guillotine blade is thereupon opened, the dosing plate receives the curd column in the draining column. The dosing plate is thereupon moved down in the sliding sleeve, whereby the curd column moves down along with it.

As soon as the curd column has been lowered over a set distance, which corresponds to the desired height of the curd blocks, the guillotine blade is closed again. A curd block is thereby cut off, after which, if necessary, the dosing plate comes down further to the lower end of the sliding sleeve. Then the sliding sleeve with the cut-off curd block therein is slid sideways off the dosing plate to a so-called sluice plate system. Between the dosing plate and the sluice plate system there are one or more transfer plates. When the curd block rests on the sluice plate system, which can comprise for instance two sluice plates moving apart sideways, the sluice plate system is opened. The curd block then falls into a cheese mold placed directly under the sluice plate system. Thereupon the cheese mold is transported further and the sliding sleeve and the dosing plate are brought into the initial position again, so that the cycle described can repeat itself.

A similar apparatus is known from EP 09314b3 (Tetra Laval). In this known apparatus the sliding sleeve together with the dosing plate is moved from a first position under the draining column to a second position above a cheese mold. The dosing plate with the sliding sleeve is thereby moved horizontally from the dosing cylinder to a transfer cylinder. The piston rod of the transfer cylinder then supports the dosing plate and allows it to move downwards, whereby the curd block moves down with respect to the sliding sleeve into a cheese mold without bottom. The cheese mold, with the curd block, is thereupon discharged in a manner not specified in detail, but the dosing plate remains behind. A new cheese mold is thereupon moved above the dosing plate, after which the dosing plate is moved by the transfer cylinder through the cheese mold back up again, up to the sliding sleeve. Finally, the dosing plate together with the sliding sleeve is moved sideways, under the draining column and above the dosing cylinder, and the cycle can repeat itself.

US 5 082 681 discloses an apparatus for producing moulded cheese blocks. The cheese blocks are cut from the lower end of a curd column present in a draining tower. A block cut off from said curd column is received in a dosing plate which is vertically movable in a cheese mould by means of a piston rod extending through a hole in the bottom of said cheese mould. The curd block in the cheese mould is then pressed in a number of pressing stations situated along a rotating turntable. During the pressing the dosing plate is in the cheese mould under the curd block. Finally in a transfer station the pressed curd block is pushed vertically out of the mould by means of a piston rod pushing through the hole in the mould bottom against the dosing plate. In the raised position of the curd block the block is pushed horizontally of the dosing plate and onto a conveyor by a ram.

A problem occurring in the known apparatuses is that by sliding the curd block from the dosing plate to the sluice plate system, or by sliding a filled cheese mold without bottom from a dosing plate supported by a transfer cylinder to a discharge apparatus, the fresh curd block is exposed to mechanical forces, such as shear stresses and frictional forces, so that defects can arise in the curd block, such as broken-off bits and/or small holes (pinholes).

The object of the invention is to remove, at least to reduce, the mechanical forces acting on a curd block during transfer of the curd block from the initial position under the guillotine blade to the sluice plate system, to thereby prevent the breaking off of bits and the formation of pinholes in the cheese as far as possible.

To this end, according to the invention, an apparatus of the above-described kind is characterized in that the dosing plate is coupled with the operating means, such that the dosing plate can be pulled away horizontally from under the curd block and into said first position when the sliding sleeve is in the second position.

In the following, the invention will be further described with reference to the appended drawing.
Fig. 1 schematically shows an example of a known cheese making apparatus where the invention can be applied;
Fig. 2 schematically illustrates an example of a known method for transferring a curd block to a cheese mold;
Fig. 3 schematically shows an example of an apparatus according to the invention; and
Fig. 4 schematically shows an example of a detail of the apparatus of Fig. 3.

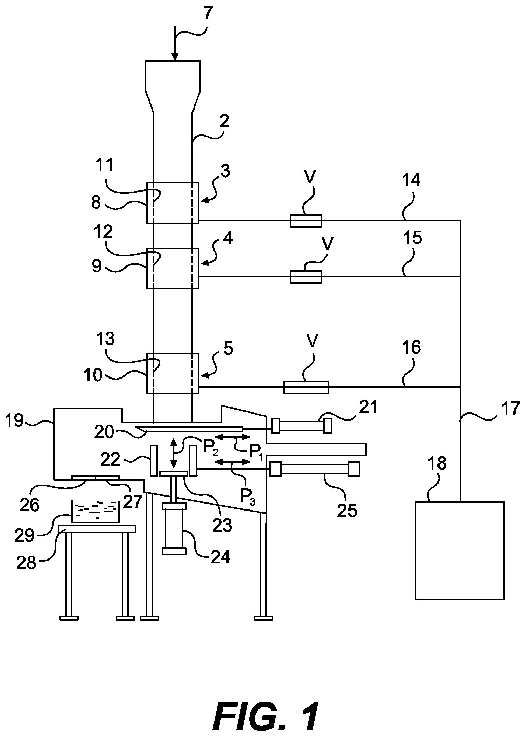

Fig. 1 schematically shows an example of a known cheese making apparatus 1, as for instance marketed by applicant under the name of Tetra Tebel Casomatic® SC, where the invention can be applied. The apparatus shown comprises a vertical tubular draining column 2, which is provided with three draining sections 3, 4, and 5, which are arranged with a mutual interspace in vertical direction. In operation, a whey-curd mixture is supplied to the upper end 6 of the column, as schematically indicated with an arrow 7. The draining sections are each provided with a jacket 8, 9, 10, which encloses a perforated wall portion 11, 12, 13 of the draining column. Whey egressing from the whey-curd mixture is operatively collected in the jackets and in a known manner discharged to a whey reservoir 18 through whey discharge pipes 14 to 17 provided with regulating valves V.

It is noted that the apparatus shown comprises a single column, but that the invention is also applicable with cheese making apparatuses having a multiple column, as for instance marketed under the name of Tetra Tebel Casomatic® MC. A multiple column comprises a number of parallel vertical draining tubes, which are placed within a common outer jacket. Separate draining sections are formed by horizontal partitions or the like, arranged in the jacket, which have passage openings for the draining tubes but are otherwise closed partitions.

The draining column 2 of the single type. or of the multiple type not shown, joins by its underside a dosing device 19 for cutting off and discharging blocks of cheese. The curd column operatively situated in the draining column rests on a horizontal guillotine blade 20 closing off the open underside of the draining column, which can be operated by a cylinder 21, as symbolized with a double arrow P1. As an alternative, not shown, the guillotine blade may also be designed with an electric motor drive.

Situated under the guillotine blade 20 is a sliding sleeve 22, with a dosing plate 23, in fact forming a reciprocable bottom of the sliding sleeve, which is movable in vertical direction with the aid of a vertical dosing plate lifting device, in the following further represented as a cylinder 24, as indicated with an arrow P2. However, the dosing plate lifting device may also be designed with, for instance, electric drive means, such as a stepping motor or servomotor. The sliding sleeve can furthermore be moved in horizontal direction with the aid of a cylinder 25, as indicated with a double-headed arrow P3. Alternatively, the sliding sleeve may also be designed with an electric motor drive. The sliding sleeve can be pushed sideways by the cylinder 25 to a position above so-called sluice plates 26. 27, whereby the sliding sleeve having a cut-off curd block therein slides off the bottom 23 to the sluice plates. Situated between the bottom 23 and the sluice plates are one or more transfer plates, not shown. When the sluice plates are moved apart, the curd block falls into a cheese mold 29 placed under the sluice plates on a conveying device 28. In Fig. 1 there is a curd block 30 in the cheese mold.

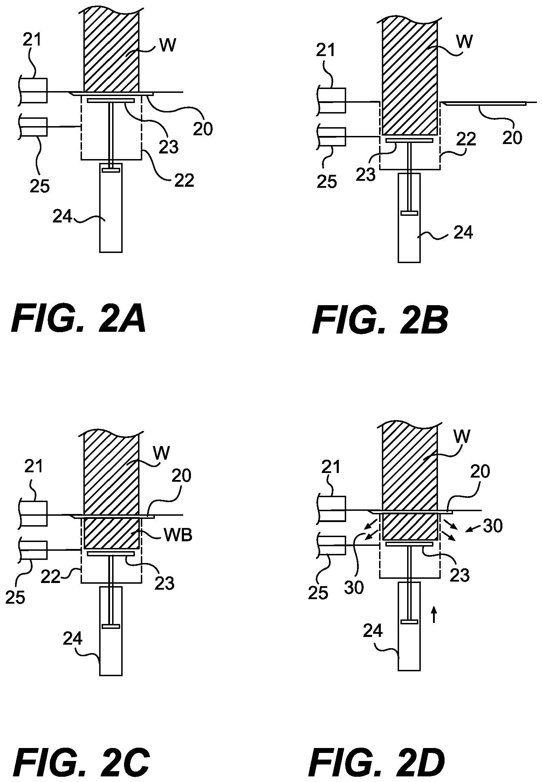

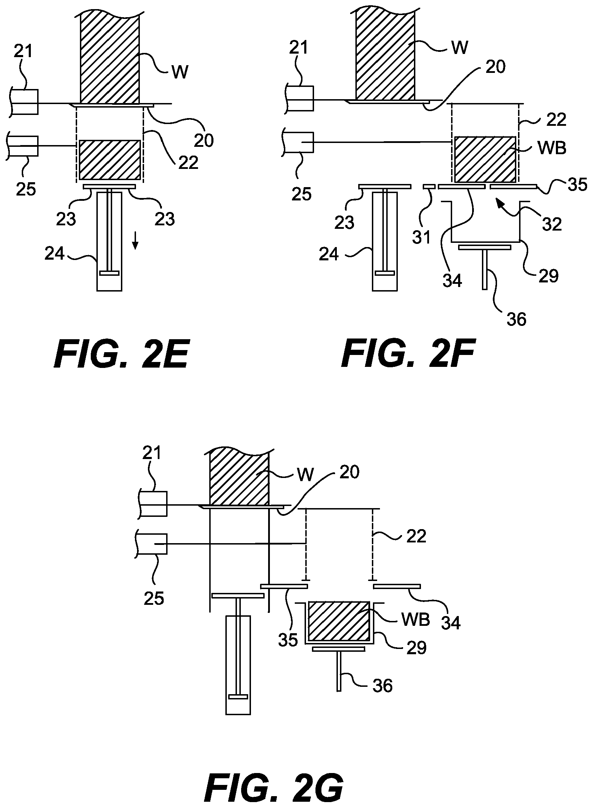

The above-described process is once more shown schematically in more detail and stepwise in Fig. 2. In Fig. 2 the same reference numerals as in Fig. 1 are used for corresponding parts. Fig. 2 illustrates the cutting off of a curd block and the transfer thereof to a cheese mold for a draining apparatus with single column. In the case of a multiple column, the sliding sleeve and the cheese molds are provided with a number of receiving spaces corresponding to the number of draining tubes in the column.

Fig. 2 shows a curd column W which is operatively situated in the draining column, not shown in Fig. 2. In Fig. 2A, the curd column W rests on a guillotine blade 20 which closes off the draining column at the lower end. In the situation of Fig. 2A, closely under the guillotine blade 20 a dosing plate 23 is situated in a sliding sleeve 22. The dosing plate 23 can be moved in a vertical sense by cylinder 24. Further, horizontally acting cylinders 21, 25 are shown, which are coupled with the guillotine blade and the sliding sleeve.

In the situation of Fig. 2B, the guillotine blade 20 is open and the curd column W rests on the dosing plate 23. The curd column has been lowered over the desired distance with the aid of the cylinder 24 and gravity, and has a lower portion situated in the sliding sleeve 22. Thereupon, the guillotine blade is closed again, as shown in Fig. 2C, yielding a loose curd block WB which is situated under the guillotine blade, in the sliding sleeve. In Fig. 2D an intermediate prepressing step is shown. whereby the curd block WB is briefly pushed against the guillotine blade with the aid of the cylinder 24 in order to strengthen the block. Whey can then egress from the curd via perforations in the wall of the sliding sleeve, as symbolized with arrows 30.

After this, the dosing plate 23 is moved down, so that the curd block WB comes to lie at the bottom of the sliding sleeve 22, as shown in Fig. 2E. The dosing plate is then situated just under the bottom edge of the sliding sleeve.

The sliding sleeve 22 having therein the curd block WB can now be pushed sideways by means of the cylinder 25, as shown in Fig. 2F. The curd block thereby slides, by the underside thereof, off the dosing plate 23, and via one or more transfer plates 31 comes to stand, together with the sliding sleeve, on a sluice plate system 32. Situated under the sluice plate system is a cheese mold 29.

In the example shown, the sluice plate system 32 shows two sluice plates 34, 35. which, through means not shown, can be pulled apart. as shown in Fig. 2G. The curd block WB then falls into the cheese mold 29. standing on a conveyor 36, or a lifting device, not shown, of the conveyor. The cheese mold is thereupon discharged and the sliding sleeve 22 is brought to the position under the curd column again. Further, the sluice plates 34, 35 are closed again and the dosing plate is moved up again to a position under the guillotine blade, so that the cycle described can repeat itself.

As already noted, the curd block may be damaged due to the sliding movement over the dosing plate, the transfer plate or plates and the sluice plate or plates, and due to the transitions between those plates.

According to the invention, the chance of damage of the curd block can be strongly reduced by the use of a dosing plate which also fulfills the function of sluice plate and transfer plate. To that end, the dosing plate continues to support the curd block also during the displacement of the sliding sleeve with the curd block to a position above the cheese mold, so that the curd block does not need to be displaced over different plates.

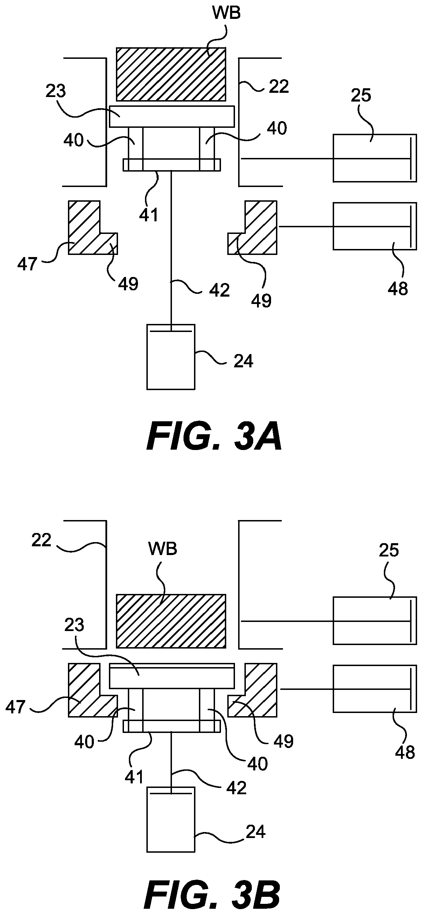

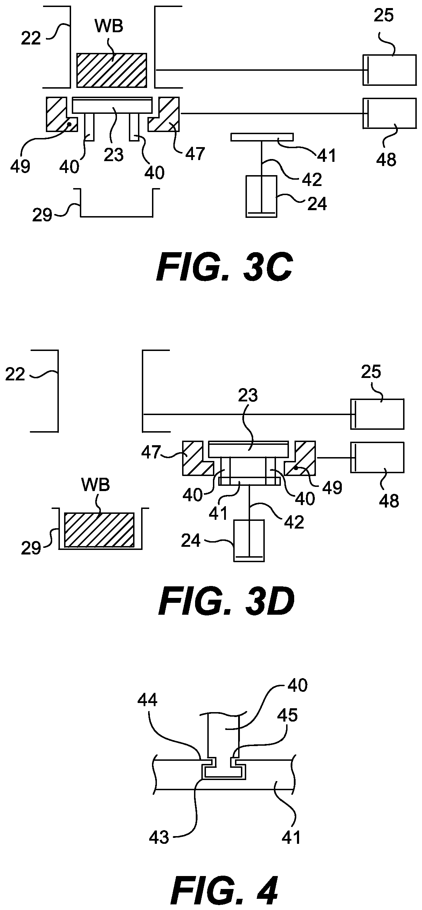

Fig. 3 schematically shows an example of an embodiment of the invention. Corresponding parts in Fig. 3 are indicated with the same reference numerals as in Fig. 1 and Fig. 2.

Fig. 3A shows a similar situation to Fig. 2D. A curd block WB has been cut off from the curd column and rests on a dosing plate 23. The curd block is still at the top in the sliding sleeve 22. The dosing plate 23, at the underside thereof, is provided with one or more supports 40, fixedly connected with the dosing plate, which rest on a coupling plate 41, which is connected with the piston rod 42 of the cylinder 24. The supports 40 are connected with the coupling plate 41, such that upon a movement in vertical direction a fixed connection is involved, whereas upon a horizontal movement the dosing plate 23 is movable sideways with respect to the coupling plate 41. To this end, the supports may for instance be provided near the lower ends thereof with slots in which engage the arms of a correspondingly shaped C-shaped slot in the coupling plate 41. An example of a possible embodiment is schematically represented in Fig. 4. The C-shaped groove in the coupling plate 41 is indicated with 43 and the arms of the C-shaped groove with 44. The slots in the support 40 are indicated with 45. The horizontal movement which is necessary to bring the curd block to the filling position above the cheese mold then gives the desired uncoupling of the dosing device and, upon the returning horizontal movement, the coupling with the dosing device. Many other constructional possibilities of forming a connection between the dosing plate and the coupling plate that allows a horizontal displacement of the dosing plate with respect to the coupling plate will readily occur to those skilled in the art. In addition to physical couplings, also for instance magnetic couplings are possible, where a magnetic field makes the dosing plate follow the vertical movement of the dosing plate lifting device. Also, this magnetic field can then take care of the proper positioning of the dosing plate with respect to the dosing device upon return after the curd block has been filled into the cheese mold.

Situated directly under the sliding sleeve 22 is a holder 47 for the dosing plate 23. In the drawing, for clarity, an interspace has been left clear between the sliding sleeve 22 and the holder 47 as well as between the curd block and the dosing plate. In reality, the curd block lies directly on the dosing plate, and the holder 47 lies directly under the sliding sleeve.

The holder 47 is furthermore coupled with a cylinder 48.

In the situation shown in Fig. 3B, the dosing plate 23 is situated in the holder 47, which for that purpose is provided with one or more supporting edges or supporting lugs 49. The curd block WB rests on the dosing plate 23.

From the situation of Fig. 3B, the holder 47 with the dosing plate therein is pushed sidewards by the cylinder 48. As an alternative (not shown), the holder can also be designed with an electric motor drive. Simultaneously, also the sliding sleeve with the curd block therein moves along in the same direction and with the same speed, so that the curd block WB continues to lie on the dosing plate. The supports 40 thereby come clear of the coupling plate 41 which, together with the vertical cylinder 24, remains stationary, as can be seen in Fig. 3C. The holder 47 and the dosing plate 23, which carries the curd block WB, are now above a cheese mold 29.

In a practical embodiment, guide elements for the holder and the sliding sleeve are present. However, these are not represented in the figure.

In the next phase, with the aid of the cylinder 48 and the holder 47, the dosing plate is now pulled away abruptly and with high speed from under the curd block WB into the initial position under the draining column. At the same time, the sliding sleeve is held in the position above the cheese mold by the cylinder 25 (see Fig. 3D) and, if desired, an end position lock, not shown. The curd block WB then falls upright out of the sliding sleeve into the cheese mold 29.

The dosing plate 23 in fact functions also as sluice plate here. Pulling away the dosing plate is to be done abruptly and fast to prevent damage of the curd block and to cause the curd block to fall straight down, without tilting. This could be compared to the well-known magic trick where a tablecloth is pulled away from under dishes and plates and the like so fast that the dishes and plates simply remain standing on the table. The required acceleration and speed of movement will be set depending on the adhesive force of the curd block. The dosing plate may have undergone a special surface treatment and/or be manufactured of special material to minimize adhesion between dosing plate and curd block.

By the use of a dosing plate which on the one hand can be reciprocated in vertical direction by an associated vertically acting dosing plate lifting device but on the other hand, by the use of a coupling plate, a sliding or magnetic connection and a horizontal dosing plate cylinder, can also move sideways relative to the dosing plate lifting device, the dosing plate can continue to support the curd block both in a vertical path and in a horizontal path. Consequently, the curd block does not need to be slid over different plates, but can be brought directly above the cheese mold by the dosing plate. This reduces the chance of defects in the curd block and of curd parts breaking off. In fact, the dosing plate replaces the sluice plate or plates and the transfer plate or plates.

The chance of damage is reduced still further by pulling the dosing plate away from under the curd block abruptly and fast. In this way, the curd block does not adhere, or adheres to a lesser extent, to the dosing plate. Also, the tendency of the curd block to fall slightly tilted into the cheese mold is prevented or at least reduced.

It is noted that after the foregoing, various modifications will readily occur to those skilled in the art. Thus, there is the possibility, already mentioned, of applying the invention to other types of draining columns as for instance a multiple draining column. In that case, also an adapted sliding sleeve with multiple compartments and adapted cheese molds need to be used.

Furthermore, the coupling between the vertically acting cylinder 24 and the horizontally and vertically movable dosing plate can be implemented in many different ways. Further, vertically, or horizontally, acting cylinders do not themselves need to be positioned vertically, or horizontally, if use is made of suitable transmission means. Further, instead of cylinders, other drive means, for instance electric drives, can be used.

These and similar modifications are understood to fall within the framework of the invention as defined in the appended claims.

## Claims

1. An apparatus for making cheese, comprising at least one vertical tubular draining column (2) for receiving and draining cheese curd, which column (2) at the lower end is provided with a dosing device (19) for cutting off and discharging blocks of curd (WB), which dosing device (19) comprises a dosing plate (23) vertically reciprocable in a sliding sleeve (22), for positioning a cut-off curd block (WB) in the sliding sleeve, which sliding sleeve (22) is horizontally reciprocable between a first position just under the draining column (2) and a second position above a set-up point for a cheese mold (29), wherein supporting means are provided for supporting a curd block (WB) during a movement of the sliding sleeve (22) from the first to the second position, as well as operating means (48) for removing the supporting means when the sliding sleeve is in the second position, and wherein the reciprocable dosing plate (23) is further designed as supporting means for a curd block (WB) during the movement of the sliding sleeve (22) from the first to the second position, **characterized in that** the dosing plate (23) is coupled with said operating means (48), such that the dosing plate (23) can be pulled away horizontally from under the curd block (WB) and into said first position when the sliding sleeve (22) is in the second position.

2. An apparatus according to claim 1, **characterized in that** the operating means (48) coupled with the dosing plate (23) are configured such that the dosing plate (23) can be pulled away abruptly and quickly from under the curd block (WB) when the sliding sleeve (22) is in the second position.

3. An apparatus according to claim 1 or 2, **characterized in that** the dosing plate (23) is coupled via a coupling plate (41) with a vertically acting lifting device (24) for positioning a cut-off curd block (WB) in the sliding sleeve (22), and that the dosing plate (23) is further coupled with a horizontally acting operating device (48) for moving the dosing plate (23) in horizontal direction for supporting a curd block (WB) during the movement of the sliding sleeve (22) from the first to the second position, wherein the dosing plate (23) is coupled with the coupling plate (41) via a horizontal sliding connection.

4. An apparatus according to claim 3, **characterized in that** the dosing plate (23) is connected with the coupling plate (41) through supports (40), which supports are slidably arranged in grooves (43) in the coupling plate (41).

5. An apparatus according to claim 3 or 4, **characterized in that** the operating device (48) is coupled with the dosing plate (23) via a holder (47, 49) for the dosing plate (23), situated directly under the sliding sleeve (22), wherein the holder (47, 49) is so designed that the dosing plate (23) can be moved up from the holder (47, 49) to receive the curd column (W) operatively situated in the draining column (2) and a cut-off curd block (WB), respectively.

6. An apparatus according to claim 3 or 5, **characterized in that** the dosing plate (23) is coupled with the coupling plate (41) via a magnetic connection.

## Patentansprüche

1. Käseherstellungsvorrichtung, umfassend mindestens eine vertikale röhrenförmige Abführsäule (2) zur Aufnahme und zum Abführen von Käsebruch, wobei die Säule (2) am unteren Ende mit einer Dosiervorrichtung (19) zum Abschneiden und Ausgeben von Bruchblöcken (WB) ausgestattet ist, wobei die Dosiervorrichtung (19) eine Dosierplatte (23) umfasst, die in einer Gleithülse (22) vertikal hin und her bewegbar ist, um einen abgeschnittenen Bruchblock (WB) in der Gleithülse zu platzieren, wobei die Gleithülse (22) zwischen einer ersten Position unmittelbar unter der Abführsäule (2) und einer zweiten Position über einem Einstellpunkt für eine Käseform (29) horizontal hin und her bewegbar ist, wobei Stützmittel zur Unterstützung eines Bruchblocks (WB) während der Bewegung der Gleithülse (22) aus der ersten in die zweite Position sowie Bedienungsmittel (48) zur Entfernung der Stützmittel, wenn sich die Gleithülse in der zweiten Position befindet, vorhanden sind, und wobei die hin und her bewegbare Dosierplatte (23) ferner als Stützmittel für einen Bruchblock (WB) während der Bewegung der Gleithülse (22) aus der ersten in die zweite Position ausgelegt ist, **dadurch gekennzeichnet, dass** die Dosierplatte (23) mit dem Bedienungsmittel (48) verbunden ist, derart, dass die Dosierplatte (23) horizontal von unterhalb des Bruchblocks (WB) und in die erste Position gezogen werden kann, wenn sich die Gleithülse (22) in der zweiten Position befindet.

2. Vorrichtung nach Anspruch 1, **dadurch gekennzeichnet, dass** die mit der Dosierplatte (23) verbundenen Bedienungsmittel (48) derart ausgelegt sind, dass die Dosierplatte (23) abrupt und schnell von unterhalb des Bruchblocks (WB) weggezogen werden kann, wenn sich die Gleithülse (22) in der zweiten Position befindet.

3. Vorrichtung nach Anspruch 1 oder 2, **dadurch gekennzeichnet, dass** die Dosierplatte (23) über eine Kupplungsplatte (41) mit einer vertikal wirkenden Hebevorrichtung (24) zur Platzierung eines abgeschnittenen Bruchblocks (WB) in der Gleithülse (22) verbunden ist und dass die Dosierplatte (23) ferner mit einer horizontal wirkenden Bedienungsvorrichtung (48) zur Bewegung der Dosierplatte (23) in eine horizontale Richtung zur Unterstützung eines Bruchblocks (WB) während der Bewegung der Gleithülse (22) aus der ersten in die zweite Position verbunden ist, wobei die Dosierplatte (23) über eine horizontale Gleitverbindung mit der Kupplungsplatte (41) verbunden ist.

4. Vorrichtung nach Anspruch 3, **dadurch gekennzeichnet, dass** die Dosierplatte (23) durch Stützen (40) mit der Kupplungsplatte (41) verbunden ist, wobei die Stützen verschiebbar in Rillen (43) in der Kupplungsplatte (41) angeordnet sind.

5. Vorrichtung nach Anspruch 3 oder 4, **dadurch gekennzeichnet, dass** die Bedienungsvorrichtung (48) über einen Halter (47, 49) für die Dosierplatte (23) mit der Dosierplatte (23) verbunden ist, der direkt unter der Gleithülse (22) angeordnet ist, wobei der Halter (47, 49) so konstruiert ist, dass die Dosierplatte (23) vom Halter (47, 49) nach oben bewegt werden kann, um die funktionsfähig in der Abführsäule (2) angeordnete Bruchsäule (W) bzw. einen abgeschnittenen Bruchblock (WB) aufzunehmen.

6. Vorrichtung nach Anspruch 3 oder 5, **dadurch gekennzeichnet, dass** die Dosierplatte (23) über eine magnetische Verbindung mit der Kupplungsplatte (41) verbunden ist.

## Revendications

1. Appareil pour la fabrication de fromage, comprenant au moins une colonne d'égouttage tubulaire verticale (2) destinée à recevoir et à égoutter du caillé de fromagerie, ladite colonne (2) étant pourvue, au niveau de l'extrémité inférieure, d'un dispositif de dosage (19) destiné à découper et évacuer des blocs de caillé (WB), ledit dispositif de dosage (19) comprenant une plaque de dosage (23) pouvant effectuer un mouvement alternatif dans le sens vertical dans un manchon coulissant (22), destinée à positionner un bloc de caillé (WB) découpé dans le manchon coulissant, ledit manchon coulissant (22) pouvant effectuer un mouvement alternatif dans le sens horizontal entre une première position juste en dessous de la colonne d'égouttage (2) et une seconde position au-dessus d'un point d'installation d'un moule à fromage (29), des moyens de support étant prévus pour supporter un bloc de caillé (WB) pendant un déplacement du manchon coulissant (22) de la première à la seconde position, ainsi que des moyens d'actionnement (48) destinés à retirer les moyens de support lorsque le manchon coulissant se trouve dans la seconde position, et la plaque de dosage (23) pouvant effectuer un mouvement alternatif étant en outre conçue pour constituer un moyen de support pour un bloc de caillé (WB) pendant le déplacement du manchon coulissant (22) de la première à la seconde position, **caractérisé en ce que** la plaque de dosage (23) est accouplée avec lesdits moyens d'actionnement (48) de telle sorte que la plaque de dosage (23) puisse être tirée horizontalement de façon à l'enlever du dessous du bloc de caillé (WB) et à l'amener dans ladite première position lorsque le manchon coulissant (22) se trouve dans la seconde position.

2. Appareil selon la revendication 1, **caractérisé en ce que** les moyens d'actionnement (48) accouplés avec la plaque de dosage (23) sont configurés de telle sorte que la plaque de dosage (23) puisse être tirée de manière abrupte et rapide depuis le dessous du bloc de caillé (WB) lorsque le manchon coulissant (22) se trouve dans la seconde position.

3. Appareil selon la revendication 1 ou 2, **caractérisé en ce que** la plaque de dosage (23) est accouplée, par le biais d'une plaque d'accouplement (41), avec un dispositif de levage agissant verticalement (24) afin de positionner un bloc de caillé (WB) découpé dans le manchon coulissant (22), et **en ce que** la plaque de dosage (23) est en outre accouplée avec un dispositif d'actionnement agissant horizontalement (48) destiné à déplacer la plaque de dosage (23) dans la direction horizontale pour supporter un bloc de caillé (WB) pendant le déplacement du manchon coulissant (22) de la première à la seconde position, la plaque de dosage (23) étant accouplée avec la plaque d'accouplement (41) par le biais de d'un raccordement coulissant horizontal.

4. Appareil selon la revendication 3, **caractérisé en ce que** la plaque de dosage (23) est raccordée avec la plaque d'accouplement (41) par le biais de supports (40), lesdits supports étant disposés à coulissement dans des rainures (43) dans la plaque d'accouplement (41).

5. Appareil selon la revendication 3 ou 4, **caractérisé en ce que** le dispositif d'actionnement (48) est accouplé avec la plaque de dosage (23) par le biais d'un dispositif de support (47, 49) pour la plaque de dosage (23), situé directement en dessous du manchon coulissant (22), le dispositif de support (47, 49) étant conçu de telle sorte que la plaque de dosage (23) puisse être déplacée vers le haut à partir du dispositif de support (47, 49) afin de recevoir respectivement la colonne de caillé (W) fonctionnellement située dans la colonne d'égouttage (2) et un bloc de caillé (WB) découpé.

6. Appareil selon la revendication 3 ou 5, **caractérisé en ce que** la plaque de dosage (23) est accouplée avec la plaque d'accouplement (41) par le biais d'un raccordement magnétique.
